# EUROPEAN PATENT APPLICATION

(11) **EP 3 059 170 A1**
(43) Date of publication of application: **24.08.2016**
(21) Application number: 16155776.4
(22) Date of filing: 15.02.2016
(51) Int. Cl.: B64D 45/02, F16B 37/14, F16B 33/00

(54) **CAP WITH INJECTED SEALANT**

(30) Priority: 20.02.2015 GB 201502858
(71) Applicant: Airbus Operations Limited, Bristol BS34 7PA (GB)
(72) Inventor: Dobbin, Richard, Bristol, BS34 7PA (GB)
(74) Representative: Ribeiro, James Michael

(57) **Abstract**

A cap for forming a sealed cavity around an end of a fastener. The cap has a cap body with an annular base (210) terminating at an inner cap rim (211) which surrounds an opening into a central cavity (130) and lies in an inner cap plane (212) around a majority of a circumference of the annular base (210). A skirt (220) provides an annular pocket (240) between the skirt (220) and the annular base (210). The skirt (220) has a first part (222) which is integrally formed with the cap body from a first material and terminates at an edge (223), and a second part (224) which is formed from a second material and extends from the edge (223) of the first part (222) of the skirt (220) to a skirt rim (225) which lies in or below the inner cap plane (212) around a majority of a circumference of the skirt (220). The second part (224) of the skirt (220) is attached to the edge (223) of the first part (222) of the skirt (220) by a joint comprising a male part (226) received in an annular groove which runs round the circumference of the skirt (220). The first material has a first elastic modulus and the second material has a second elastic modulus which is lower than the first elastic modulus. An inlet hole (251) in the skirt (220) is in fluid communication with the annular pocket (240) to permit a flow of sealing material through the skirt (220) via the inlet hole (251) into the annular pocket (240). The skirt (220) forms a continuous annular wall with no holes through the annular skirt (220) in fluid communication with the annular pocket (240) other than the inlet hole (251). In one embodiment the second part (224) of the skirt (220) has a length between the edge (223) of the first part (222) and the skirt rim (225) which varies around the circumference of the skirt (220).

## Description

### FIELD OF THE INVENTION

The present invention relates to a cap for forming a sealed cavity around an end of a fastener protruding from a structure. It also relates to a joint with such a cap, a method of forming such a joint, and a method of manufacturing a cap.

### BACKGROUND OF THE INVENTION

A known cap for forming a sealed cavity around an end of a fastener protruding from a structure is described in WO-A-2012/107741. The cap has a two part construction with an inner cap and an outer cap. Sealing material is provided between the caps, and the outer cap is pushed down to force the sealing material into an annular pocket and form a seal with the structure.

### SUMMARY OF THE INVENTION

A first aspect of the invention provides a cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket, wherein the skirt forms a continuous annular wall with no holes through the annular skirt in fluid communication with the annular pocket other than the inlet hole.

A further aspect of the invention provides a cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket, wherein the second part of the skirt has a length between the edge of the first part and the skirt rim which varies around the circumference of the skirt. The skirt may be formed with an outlet hole for air to escape, or it may form a continuous annular wall (as with the first aspect of the invention) with no holes through the annular skirt in fluid communication with the annular pocket other than the inlet hole.

Typically the length of the second part of the skirt increases around the circumference of the skirt away from the inlet hole, optionally reaching a maximum opposite the inlet hole.

The length of the second part of the skirt may increase continuously around the circumference of the skirt, or in discrete steps.

A further aspect of the invention provides a cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket, wherein the second part of the skirt is attached to the edge of the first part of the skirt by a joint comprising a male part received in a groove which runs round the circumference of the skirt. The skirt may be formed with an outlet hole for air to escape, or it may form a continuous annular wall, as in the first aspect of the invention, with no holes through the annular skirt in fluid communication with the annular pocket other than the inlet hole. The second part of the skirt may have a constant length, or it may have a length between the edge of the first part and the skirt rim which varies around the circumference of the skirt as in the second aspect of the invention.

In the previous aspects of the invention, the skirt rim either extends to the inner cap plane around at least a majority of a circumference of the skirt (so that the skirt rim lies in the inner cap plane around at least a majority of a circumference of the skirt) or it extends through the inner cap plane around at least a majority of a circumference of the skirt (so that there is an offset between the skirt rim and the inner cap plane around at least a majority of a circumference of the skirt).

A further aspect of the invention provides a cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt extends from the cap body to a skirt rim, and the skirt extends through the inner cap plane around a majority of a circumference of the skirt so that there is an offset between the skirt rim and the inner cap plane; and an inlet hole in the skirt, wherein the inlet hole is in fluid communication with the annular pocket to permit a flow of sealing material through the skirt via the inlet hole into the annular pocket. The skirt may be formed with an outlet hole for air to escape, or it may form a continuous annular wall, as in the first aspect of the invention, with no holes through the annular skirt in fluid communication with the annular pocket other than the inlet hole. Preferably the skirt has a first part which is integrally formed with the cap body from a first material and terminates at an edge, and a second part which is formed from a second material and extends from the edge of the first part of the skirt to a skirt rim, wherein the first material has a first elastic modulus, and the second material has a second elastic modulus which is lower than the first elastic modulus.

The following comments apply to all aspects of the invention.

Preferably at least part of the skirt extends outwardly from the cap body, either at an acute angle to the annular base or at a right angle to the annular base.

Optionally the skirt comprises a tubular projection which projects outwardly from the skirt and leads to the inlet hole.

The inlet hole may be formed in the first or second part of the skirt.

Preferably the second material is an elastomer.

A further aspect of the invention provides a method of manufacturing the cap of any preceding aspect, the method comprising co-bonding the first part of the skirt and the second part of the skirt.

A further aspect of the invention provides a joint comprising: a structure; an end of a fastener protruding from the structure; and a cap according to any of the preceding aspects forming a sealed cavity around the end of the fastener, the cap comprising a cured sealing material in the annular pocket which secures the cap to the structure.

Optionally the skirt rim contacts the structure, although there may be sealing material between the structure and some (or all) of the skirt rim.

Optionally the inner cap rim contacts the structure (preferably around a full circumference of the inner cap rim) although there may be sealing material between the structure and some (or all) of the inner cap rim.

Optionally the second part of the skirt is flexed around its full circumference.

A further aspect of the invention provides method of assembling the joint of any preceding aspect, the method comprising: fitting the cap over the end of the fastener; and injecting sealing material through the skirt via the inlet hole into the annular pocket.

Typically the second part of the skirt flexes as the sealing material is injected so that the skirt rim lifts up to form a gap between the skirt rim and the structure which enables air to escape the annular pocket by flowing through the gap.

Prior to fitting the cap over the end of the fastener, the skirt may extend through the inner cap plane around a majority of a circumference of the skirt so that there is an offset between the skirt rim and the inner cap plane, and when the cap is fitted over the end of the fastener the skirt rim contacts the structure before the inner cap rim contacts the structure and then the skirt flexes to enable the inner cap rim to contact the structure.

The annular parts of the cap (for instance the annular pocket, the inner cap rim, and the skirt rim) may form a generally circular shape around the circumference of the cap when view in plan, or they may form any other closed shape such as a hexagon or square (for instance to enclose a fastener with a hexagonal or square shape).

The structure is preferably a structural component of an aircraft, more preferably a structural component of an aircraft wing, and most preferably a structural component of an aircraft wing which forms a boundary wall of a fuel tank.

The annular base of the cap body may or may not abut the fastener. If it abuts the fastener then it may abut the fastener via a plurality of ribs or hooks projecting from an inner surface of the annular base.

The cap may enclose each end of the fastener, so that the joint is sealed from both sides of the structure.

Any of the optional, or desirable, features discussed above or below in relation to any of the aspects of the invention may be applied to any other aspect, either individually or in any combination.

### BRIEF DESCRIPTION OF THE DRAWINGS

Embodiments of the invention will now be described with reference to the accompanying drawings, in which:
Figure 1 is a cross-section of a joint taken along a line A-A in Figure 3;
Figure 2 is a side view of the joint of Figure 1;
Figure 3 is a plan view of the joint of Figure 1;
Figure 3a is an underside view of the cap of Figure 1;
Figure 4 is a plan view of a joint with an alternative cap with an outlet recess;
Figure 5 is a side view of a joint with an asymmetrical cap;
Figure 6 is a cross-section of the joint of Figure 5 taken along a line B-B in Figure 7;
Figure 7 is a plan view of the joint of Figure 5;
Figure 8 is a plan view of a joint with an alternative asymmetrical cap with an outlet recess;
Figure 9 is a cross-section of the asymmetrical cap of Figure 5 being injected with sealant on a planar structure; and
Figure 10 shows a cap with an offset skirt rim.

### DETAILED DESCRIPTION OF EMBODIMENT(S)

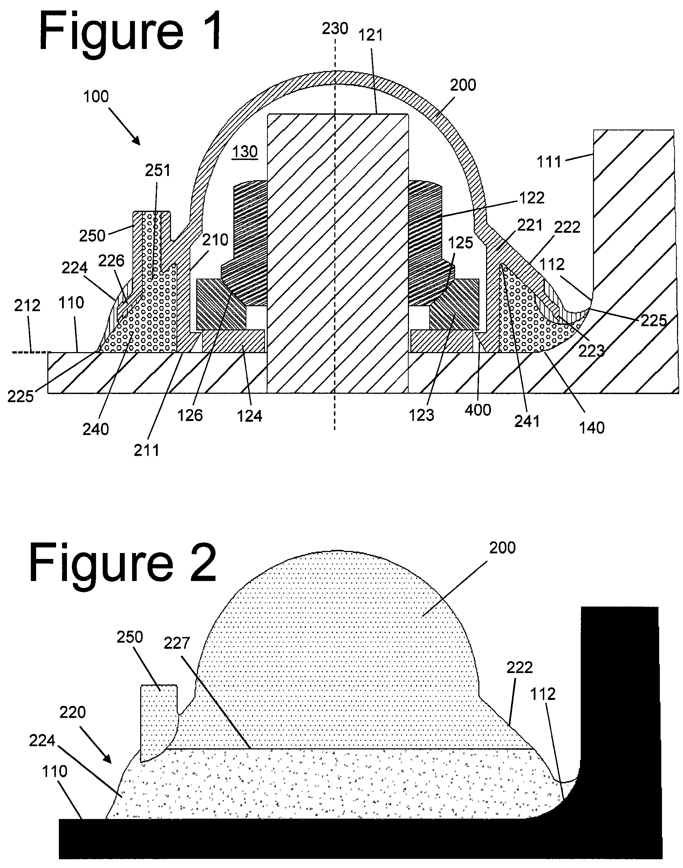

A joint 100 shown in Figure 1 comprises a structure 110-112 such as an aircraft skin panel. The structure has a horizontal planar surface 110, and a raised fillet with a vertical planar surface 111 which meets the horizontal surface 110 at a curved radius 112.

A tail end of a fastener protrudes from the structure. The fastener comprises an axially extending shaft 121 which passes through the structure, a nut 122 screwed onto the shaft 121, and a pair of washers 123, 124 between the nut 122 and the structure 110. The washer 123 has a spherical concave surface 125 which bears against a similarly shaped convex surface 126 of the nut 122, thus enabling the shaft 121 to extend at an acute angle to the surface 110 (rather than at a right-angle as in Figure 1).

A cap encloses the end of the fastener. The cap has a cap body with a domed outboard (upper) part 200 and a cylindrical annular base 210 terminating at an inner cap rim 211 which surrounds an opening into a central cavity 130. The inner cap rim 211 lies in an inner cap plane 212 so it can intimately engage with the surface 110 of the structure around substantially its full circumference when the cap is fitted over the end of the fastener as shown.

The annular base 210 is formed with three or more hooks 400 which project inwardly into the central cavity. The washer 124 has a slightly smaller outer diameter than the washer 123 so that a shallow annular recess is formed. The hooks 400 are received as a snap-fit in the recess, and the overhanging part of the washer 123 engages the hooks 400 and prevents the cap from being removed.

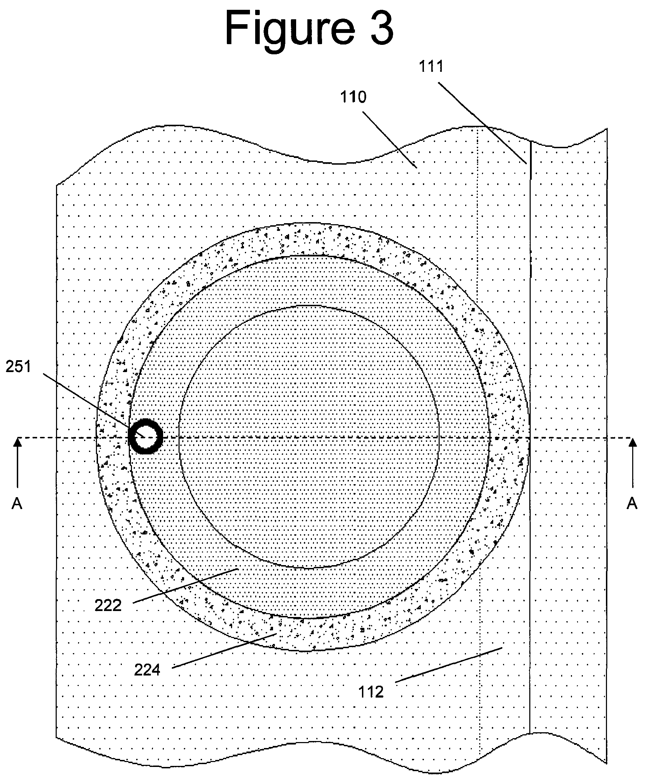

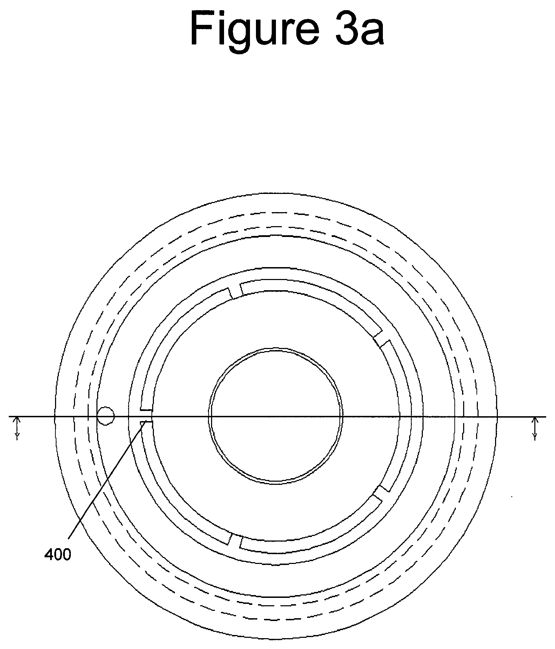

In the example of Figure 1 there are an even number of hooks 400 (for instance four or six) so Figure 1 (which is a cross-section taken along a line A-A in Figure 3) shows two hooks 400. In an alternative example there may be an odd number of hooks - for instance five as shown in Figure 3a - so in the example of Figure 3a a cross-section taken along a line Y-Y would show only one hook 400.

An annular skirt 220 extends from an outboard (upper) end 221 where it meets the cap body to an inboard (lower) skirt rim 225. The skirt 220 has a flared or frustoconical shape, and extends away from the body at an acute angle (about 45°) to a cap axis 230.

The skirt is formed in two parts: a first part 222 which is integrally formed with the cap body 200, 210, 250 from a first material and terminates at an internal edge 223, and a second part 224 which is formed from a second material and extends from the edge 223 of the first part of the skirt to the skirt rim 225. A suitable first material is a glass filled polyetherimide (PEI) resin such as Ultem 2400 or Ultem 2310, available from SABIC Innovative Plastics Holding BV. A suitable second material is a chemically resistant elastomer qualified for fuel tank and adherable to sealant, for example Viton (R) fluoroelastomer available from Du Pont, or a cured sealant material. The first material has a first Young's (tensile) modulus and the second material has a second Young's modulus which is lower than the first Young's modulus. By way of example Ultem 2400 and Ultem 2310 typically have a Young's modulus of the order of 10,000 MPa, whereas Viton fluoroelastomers typically have a Young's modulus of the order of 1-10 MPa, which is significantly lower.

The cap is manufactured as follows. First, the cap body 200, 210, 250 and the first part 222 of the skirt are formed as a single part - for instance by injection moulding using an injection moulding tool. Next, the second part 224 is formed by injecting liquid elastomer into the same injection moulding tool. The liquid elastomer flows around the first part 222 of the skirt to form a tongue-and-groove joint as shown in Figure 1. The liquid elastomer then cools and cures so that the second part 224 becomes co-bonded to the first part 222.

The tongue-and-groove joint comprises a tongue 226 terminating at the internal edge 223 of the first part of the skirt which is received in an annular groove in the second part of the skirt which runs round the circumference of the skirt. In this embodiment the male part of the joint (tongue 226) is provided by the edge 223 of the first part of the skirt and the annular groove is formed in the second part 224 of the skirt. In an alternative embodiment this arrangement may be reversed - that is, with the male part provided by the second part of the skirt and the annular groove formed in the first part. In this alternative embodiment the manufacturing process is also reversed - that is, the second part 224 of the skirt is formed initially, and the first part is formed subsequently so that the injected Ultem 2400/2310 flows around the second part 224 of the skirt to form the tongue-and-groove joint.

An annular pocket 240 is provided between the skirt 220 and the base 210. The pocket 240 extends from a closed outboard end 241 at the outboard end 221 of the skirt, to an open inboard end at the skirt rim 225. Due to the flared shape of the skirt 220, the pocket 240 has a radial width which increases as it extends from its outboard end 241 to its inboard end.

The skirt has a cylindrical tubular projection 250 which projects outwardly from the skirt, parallel to the cap axis 230, and provides an injection channel leading to an inlet hole 251. The projection 250 is arranged to interconnect with a nozzle of a sealing material injection device (not shown) to provide a flow of sealing material through the skirt via the inlet hole 251 into the pocket 240 to form a bead 140 of sealing material.

A suitable sealing material is a polythioether aerospace sealant such as PR-2001 Class B2, available from PPG Aerospace. An alternative sealing material is a two-part polysulphide based sealant or silicone based sealant. In this case the sealing material is thus typically an elastomer. A suitable polysulphide based sealant is MC-238 Class A/B, produced by Chemetall™. Two-part sealants can be supplied within a cartridge for application via an applicator gun, and are typically mixed within the cartridge before delivery via the nozzle of the gun. A further alternative sealing material is an epoxy based adhesive, most preferably a. two-part epoxy based structural adhesive such as Scotch-Weld™ 7256 B/A, produced by 3M™. Such epoxy based materials are normally used in applications in which its primary (or sole) purpose is to act as an adhesive, but in this case it acts as both an adhesive and a sealant. Such two-part adhesives are typically supplied in cartridge form (50ml cartridges being preferred) and are mixed within the nozzle of an injector gun on application. Epoxy based adhesives are free-flowing, have a low viscosity, and exhibit rapid cure at room temperature. By mixing the two-part adhesive on application it is possible to use adhesives with very low working lives, for example only a few minutes.

The inner cap rim 211 contacts the planar surface 110 of the structure around a full circumference of the inner cap rim 211 (assuming that the surface 110 is precisely planar). When the cap is an un-deformed state before it is installed on the structure, the skirt rim 225 lies in the inner cap plane 212 around its full circumference. When installed on the structure, the skirt rim 225 contacts the planar surface 110 of the structure around about 80% of its circumference and the remaining 20% of the skirt rim 225 lifts up to accommodate the raised fillet as shown in Figure 1.

As can be seen in Figure 3, the skirt 222, 224 forms a continuous annular wall with no holes in fluid communication with the annular pocket other than the inlet hole 251. The low Young's modulus of the second part 224 of the skirt makes it sufficiently flexible that as the sealing material flows from the inlet hole 251 into the annular pocket, the second part 224 of the skirt flexes so that the skirt rim 225 lifts up to open one or more small gaps between the skirt rim and the structure which enable air to escape the annular pocket by flowing through the gap(s). After the injection process is complete the skirt rim 225 may return into full contact with the structure, or the small gap(s) may remain sealed by the bead of sealing material 140.

The sealing material is then allowed to cure, leaving the cured bead 140 of sealing material in the annular pocket which secures the cap to the structure and forms a seal around the cavity 130. If the surface 110 is not perfectly planar then there will be small gaps between the inner cap rim 211 and the surface 110. Any such small gaps are sealed by the cured bead 140 of sealing material. Similarly, there may be one or more small gaps between the skirt rim 225 and the structure and any such small gaps are also sealed by the cured bead 140 of sealing material. The bead 140 prevents the ingress of water or other contaminants into the cavity 230, and also prevents plasma or other out-gassing products from exiting the cavity 230. Cured sealing material also fills the injection channel and the inlet hole 251.

Forming the cap body (particularly the domed part 200) from a relatively rigid material (rather than the relatively flexible elastomeric material of the second part 224 of the skirt) prevents the domed part 200 from deforming during installation and disturbance in the early stages of cure resulting in pumping air out of the cavity 130 to generate air bubbles in the sealing material before it cures.

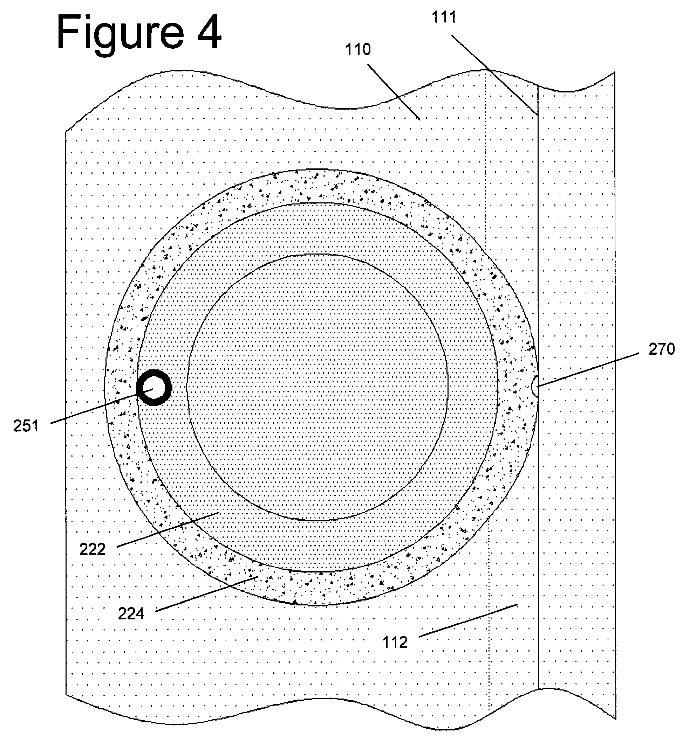

Figure 4 is a plan view of a joint with an alternative cap. The cap of Figure 4 is identical to the cap of Figures 1-3, except that skirt rim 225 is formed with a semicircular recess 270 on an opposite side of the cap axis 230 to the inlet hole 251. The same reference numbers are used to indicate equivalent components between the caps of Figure 1-3 and Figure 4.

The skirt rim 225 contacts the radius 112 of the fillet, except at the recess 270 which provides an outlet which is in fluid communication with the pocket 240 and enables air to escape the pocket 240 via the recess 270 as the sealing material flows from the inlet hole 251 into the pocket.

When the pocket 240 is full, then the pressure in the pocket increases until it forces sealing material to escape the pocket via the recess 270. When this flow of sealing material out of the recess 270 is visually observed, the flow of sealing material from the sealing material injection device is stopped and the device is removed.

Before the cap is installed as shown in Figure 1, the skirt rim 225 lies in the inner cap plane 212 around its full circumference, except at the recess 270. After installation, part of the skirt rim 225 lifts up out of the inner cap plane to accommodate the raised fillet as in the embodiment of Figure 3.

As with the embodiment of Figure 3, the skirt 222, 224 of Figure 4 forms a continuous annular wall with no holes in fluid communication with the annular pocket through the annular wall other than the inlet hole 251. The recess 270 provides an outlet for the pocket 240, but this outlet passes between the skirt rim and the structure rather than passing through the wall.

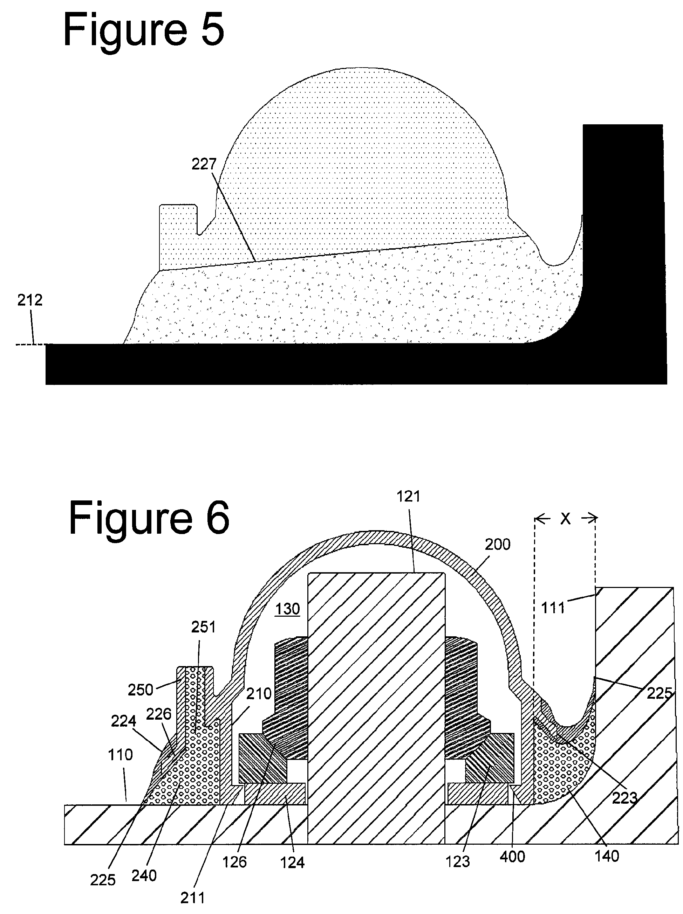

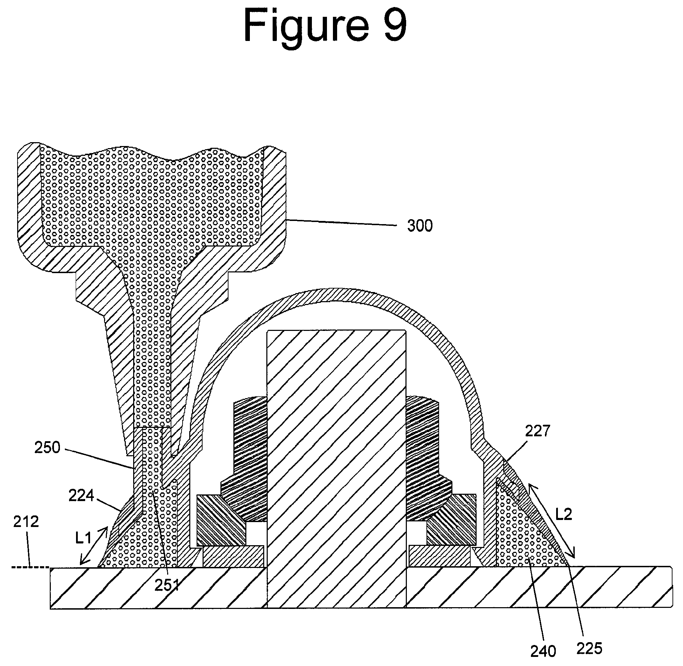

Figures 5-9 show an alternative cap with an asymmetrical skirt. The cap is similar in many respects to the cap shown in Figures 1-4, and the same reference numbers are used to indicate equivalent components. As shown in Figure 9, the second part of the skirt 224 has a length L1, L2 between the edge 223 of the first part of the skirt and the skirt rim 225 which varies around the circumference of the skirt from a minimum L1 at the inlet hole to a maximum L2 opposite the inlet hole 251. As shown in Figure 5 the length of the second part 224 of the skirt increases continuously away from the inlet hole 251 at a constant rate so that the outboard edge 227 of the second part 224 of the skirt lies in a plane at an acute angle to the plane of the skirt rim 225. This can be contrasted to Figure 2 in which the outboard edge 227 of the second part of the skirt lies parallel to the skirt rim 225.

The increased length of the flexible second part of the skirt 224 opposite the inlet hole 251 enables it to flex more so that the cap of Figure 5-9 can be placed closer to a raised fillet than the cap of Figures 1-4. Hence the distance X between the annular base 210 and the vertical part 111 of the fillet is less in Figure 6 than in Figure 2.

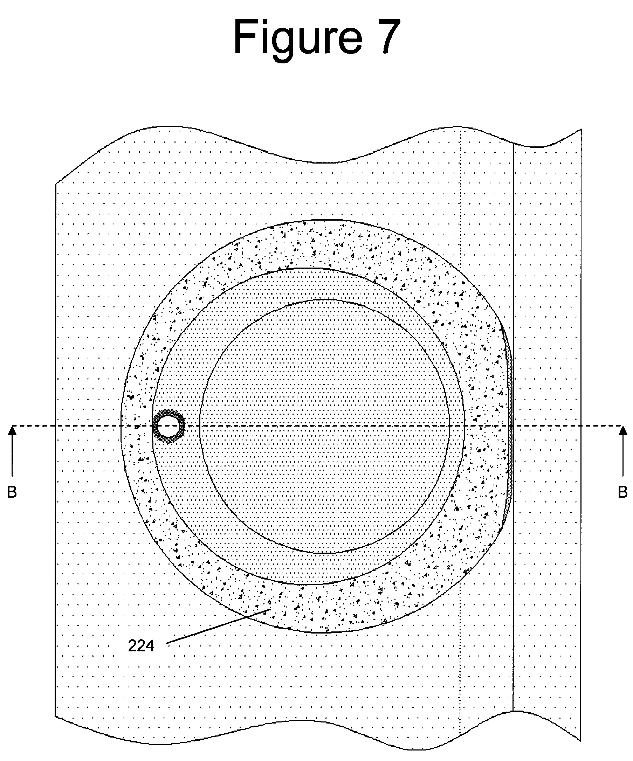

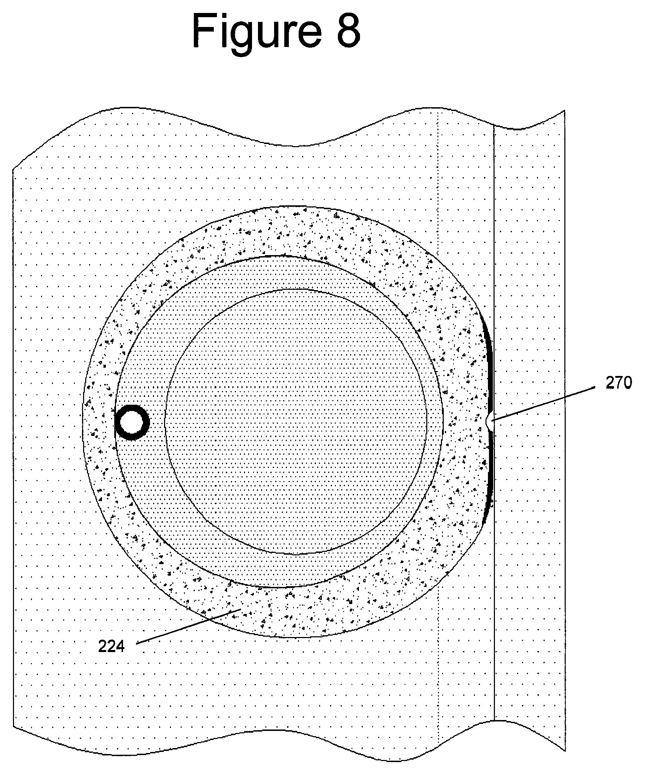

As with the embodiments of Figures 1-4, the second part of the skirt may be formed with or without a recess 270: Figure 8 showing the version with a recess 270 and Figure 7 showing a version without a recess.

Figure 9 shows the cap of Figure 6 being installed on a fully planar structure without a raised fillet. As mentioned above in relation to the embodiment of Figures 1-4, when the cap is in an un-deformed state before being installed as shown in Figure 1 the skirt rim 225 lies in the inner cap plane 212 around its full circumference, except at the recess 270 (if such a recess 270 is present). The lack of raised fillet in Figure 9 means that the cap is shown in its un-deformed state with the skirt rim 225 lying in the inner cap plane 212 around substantially its full circumference.

Figure 9 also shows the projection 250 interconnected with a nozzle 300 of a sealing material injection device to provide a flow of sealing material through the skirt via the inlet hole 251 into the annular pocket 240. They are interconnected by receiving the projection 250 within the nozzle 300, although the opposite arrangement is also possible.

Forming the projection 250 in the relatively rigid first part of the skirt (rather than the relatively flexible second part 224) enables the nozzle 300 to be pushed down firmly without deforming the skirt, and ensures a liquid-tight connection between the nozzle 300 and the projection 250.

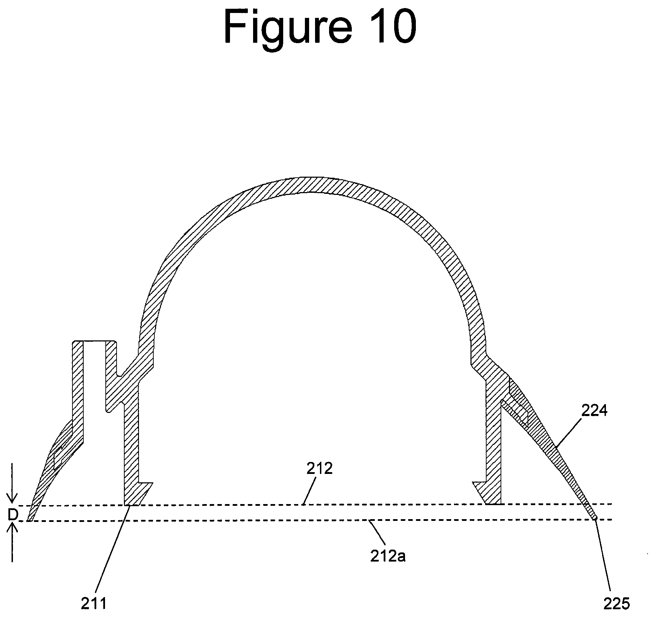

In the embodiments described above, prior to fitting the cap over the end of the fastener the skirt rim 225 lies in the inner cap plane 212 around a majority of a circumference of the skirt. The nut cap shown in Figure 10 is identical to the nut cap shown in Figure 1 (the same reference numbers being used to indicate equivalent parts) except that the second part 224 of the skirt extends through the inner cap plane 212 around at least a majority of a circumference of the skirt so that there is an offset D of up to 1.5mm between the plane 212a of the skirt rim 225 and the inner cap plane 212. In the embodiments described above, when the cap is fitted over the end of the fastener, the skirt rim 225 and inner cap rim 211 contact the structure at the same time. In the embodiment of Figure 10 the skirt rim 225 contact the structure before the inner cap rim 211 contacts the structure, and then the second part 224 of the skirt flexes around its full circumference to enable the inner cap rim 211 to subsequently contact the structure. The flexed second part 224 of the skirt is therefore in an energised state and applies an enhanced sealing force to the structure, improving the seal and enabling the skirt rim 225 to flex to account for any small undulations in the surface of the structure. Optionally the skirt rim of the nut cap of Figure 10 has a recess 270 like the embodiment of Figure 4, or the skirt rim 225 may contact the structure around its full circumference as in the first embodiment.

The following clauses define various further aspects of the invention.
Clause 1. A cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket.
Clause 2. A cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket, wherein the second part of the skirt has a length between the edge of the first part and the skirt rim which varies around the circumference of the skirt.
Clause 3. The cap of clause 1 or 2 wherein the length of the second part of the skirt increases around the circumference of the skirt away from the inlet hole.
Clause 4. The cap of clause 3 wherein the length of the second part of the skirt reaches a maximum opposite the inlet hole.
Clause 5. The cap of any preceding clause wherein the second part of the skirt is attached to the edge of the first part of the skirt by a joint comprising a male part received in an annular groove which runs round the circumference of the skirt.
Clause 6. A cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and an inlet hole in the skirt, wherein the inlet hole is in fluid communication with the annular pocket to permit a flow of sealing material through the skirt via the inlet hole into the annular pocket, wherein the second part of the skirt is attached to the edge of the first part of the skirt by a joint comprising a male part received in a groove which runs round the circumference of the skirt.
Clause 7. The cap of clause 5 or 6 wherein the male part is provided by the edge of the first part of the skirt and the annular groove is formed in the second part of the skirt.
Clause 8. The cap of any preceding clause wherein the skirt rim lies in the inner cap plane around a full circumference of the skirt.
Clause 9. The cap of any of clauses 1 to 8 wherein the skirt extends through the inner cap plane around a majority of a circumference of the skirt so that there is an offset between the skirt rim and the inner cap plane.
Clause 10. A cap for forming a sealed cavity around an end of a fastener, the cap comprising: a cap body with an annular base terminating at an inner cap rim which surrounds an opening into a central cavity and lies in an inner cap plane around a majority of a circumference of the annular base; a skirt providing an annular pocket between the skirt and the annular base, wherein the skirt extends from the cap body to a skirt rim, and the skirt extends through the inner cap plane around a majority of a circumference of the skirt so that there is an offset between the skirt rim and the inner cap plane; and an inlet hole in the skirt, wherein the inlet hole is in fluid communication with the annular pocket to permit a flow of sealing material through the skirt via the inlet hole into the annular pocket.
Clause 11. The cap of any preceding clause wherein at least part of the skirt extends away from the cap body at an acute angle to the annular base.
Clause 12. The cap of any preceding clause wherein the skirt comprises a tubular projection which projects outwardly from the skirt and leads to the inlet hole.
Clause 13. The cap of any preceding clause wherein the inlet hole is in the first part of the skirt.
Clause 14. The cap of any preceding clause wherein the second material is an elastomer.
Clause 15. A method of manufacturing the cap of any preceding clause, the method comprising co-bonding the first part of the skirt and the second part of the skirt.
Clause 16. A joint comprising: a structure; an end of a fastener protruding from the structure; and a cap according to any of clauses 1 to 14 forming a sealed cavity around the end of the fastener, the cap comprising a cured sealing material in the annular pocket which secures the cap to the structure.
Clause_17. The joint of clause 16 wherein the skirt rim contacts the structure.
Clause 18. The joint of clause 17 wherein the second part of the skirt is flexed around its full circumference.
Clause 19. The joint of clause 16, 17 or 18 wherein the inner cap rim contacts the structure.
Clause 20. A method of assembling the joint of clause 16, 17, 18 or 19, the method comprising: fitting the cap over the end of the fastener; and injecting sealing material through the skirt via the inlet hole into the annular pocket.
Clause 21. The method of clause 20 wherein the second part of the skirt flexes as the sealing material is injected so that the skirt rim lifts up to form a gap between the skirt rim and the structure which enables air to escape the annular pocket by flowing through the gap.
Clause 22. The method of clause 20 or 21 wherein prior to fitting the cap over the end of the fastener the skirt extends through the inner cap plane around a majority of a circumference of the skirt so that there is an offset between the skirt rim and the inner cap plane, and when the cap is fitted over the end of the fastener the skirt rim contacts the structure before the inner cap rim contacts the structure and then the skirt flexes to enable the inner cap rim to contact the structure.
Clause 23. A method of assembling a joint with the cap of clause 10, the joint comprising a structure, and an end of a fastener protruding from the structure, the method comprising: fitting the cap of clause 10 over the end of the fastener; and injecting sealing material through the skirt via the inlet hole into the annular pocket, wherein prior to fitting the cap over the end of the fastener the skirt extends through the inner cap plane around a majority of a circumference of the skirt so that there is an offset between the skirt rim and the inner cap plane, and when the cap is fitted over the end of the fastener the skirt rim contacts the structure before the inner cap rim contacts the structure and then the skirt flexes to enable the inner cap rim to contact the structure.

Although the invention has been described above with reference to one or more preferred embodiments, it will be appreciated that various changes or modifications may be made without departing from the scope of the invention as defined in the appended claims.

## Claims

1. A cap for forming a sealed cavity around an end of a fastener, the cap comprising:
a. a cap body with an annular base terminating at an inner cap rim which surrounds an opening into a central cavity and lies in an inner cap plane around a majority of a circumference of the annular base;
b. a skirt providing an annular pocket between the skirt and the annular base, wherein the skirt has a first part which is integrally formed with the cap body from a first material and terminates at an edge, and a second part which is formed from a second material and extends from the edge of the first part of the skirt to a skirt rim, wherein the skirt extends to or through the inner cap plane around a majority of a circumference of the skirt, the first material has a first elastic modulus, and the second material has a second elastic modulus which is lower than the first elastic modulus; and
c. an inlet hole in the skirt, wherein the inlet hole is in fluid communication with the annular pocket to permit a flow of sealing material through the skirt via the inlet hole into the annular pocket,
wherein the skirt forms a continuous annular wall with no holes through the annular skirt in fluid communication with the annular pocket other than the inlet hole.

2. The cap of claim 1 wherein the second part of the skirt has a length between the edge of the first part and the skirt rim which varies around the circumference of the skirt.

3. The cap of claim 2 wherein the length of the second part of the skirt increases around the circumference of the skirt away from the inlet hole.

4. The cap of claim 3 wherein the length of the second part of the skirt reaches a maximum opposite the inlet hole.

5. The cap of any preceding claim wherein the second part of the skirt is attached to the edge of the first part of the skirt by a joint comprising a male part received in an annular groove which runs round the circumference of the skirt.

6. The cap of any preceding claim wherein the skirt rim lies in the inner cap plane around a full circumference of the skirt.

7. The cap of any of claims 1 to 5 wherein the skirt extends through the inner cap plane around a majority of a circumference of the skirt so that there is an offset between the skirt rim and the inner cap plane.

8. The cap of any preceding claim wherein at least part of the skirt extends away from the cap body at an acute angle to the annular base.

9. The cap of any preceding claim wherein the skirt comprises a tubular projection which projects outwardly from the skirt and leads to the inlet hole.

10. The cap of any preceding claim wherein the inlet hole is in the first part of the skirt.

11. A method of manufacturing the cap of any preceding claim, the method comprising co-bonding the first part of the skirt and the second part of the skirt.

12. A joint comprising:
a structure;
an end of a fastener protruding from the structure; and
a cap according to any of claims 1 to 10 forming a sealed cavity around the end of the fastener, the cap comprising a cured sealing material in the annular pocket which secures the cap to the structure.

13. A method of assembling the joint of claim 12, the method comprising:
fitting the cap over the end of the fastener; and
injecting sealing material through the skirt via the inlet hole into the annular pocket.

14. The method of claim 13 wherein the second part of the skirt flexes as the sealing material is injected so that the skirt rim lifts up to form a gap between the skirt rim and the structure which enables air to escape the annular pocket by flowing through the gap.

15. The method of claim 13 or 14 wherein prior to fitting the cap over the end of the fastener the skirt extends through the inner cap plane around a majority of a circumference of the skirt so that there is an offset between the skirt rim and the inner cap plane, and when the cap is fitted over the end of the fastener the skirt rim contacts the structure before the inner cap rim contacts the structure and then the skirt flexes to enable the inner cap rim to contact the structure.
